Europäisches Patentamt

European Patent Office

Office européen des brevets

(19)

(11) Veröffentlichungsnummer: **0 166 201**
**B1**

(12) **EUROPÄISCHE PATENTSCHRIFT**

(45) Veröffentlichungstag der Patentschrift: **14.11.90**

(21) Anmeldenummer: **85106265.3**

(22) Anmeldetag: **22.05.85**

(51) Int. Cl.⁵: **C 08 K 5/10, C 08 L 27/06**

(54) Gleitmittel für Polyvinylchlorid.

(30) Priorität: **30.05.84 DE 3420226**

(43) Veröffentlichungstag der Anmeldung:
**02.01.86 Patentblatt 86/01**

(45) Bekanntmachung des Hinweises auf die
Patenterteilung:
**14.11.90 Patentblatt 90/46**

(84) Benannte Vertragsstaaten:
**AT BE CH DE FR GB IT LI NL**

(56) Entgegenhaltungen:
**FR-A-2 090 932**

**Gummi, Asbest, Kunststoffe, 18, 428 (1965)**

(73) Patentinhaber: Henkel Kommanditgesellschaft
auf Aktien
Postfach 1100 Henkelstrasse 67
D-4000 Düsseldorf-Holthausen (DE)

(72) Erfinder: Worschech, Kurt, Dr.
Alte Strasse 4
D-2854 Loxstedt-Bexhövede (DE)
Erfinder: Löffelholz, Frido
Vieländer Weg 226 F
D-2850 Bremerhaven-Surheide (DE)
Erfinder: Wedl, Peter
Brookstrasse 10
D-2854 Loxstedt-Bexhövede (DE)
Erfinder: Wegemund, Bernd, Dr.
Händelweg 3
D-5657 Haan (DE)

EP 0 166 201 B1

Courier Press, Leamington Spa, England.

**Beschreibung**

Die Erfindung betrifft Gleitmittel für die formgebende Verarbeitung von Polyvinylchlorid und überwiegend Vinylchlorid enthaltende Mischpolymerisate.

Für die formgebende Verarbeitung von Polyvinylchlorid und überwiegend Vinylchlorid enthaltenden Mischpolymerisaten werden neben Stabilisatoren und anderen Verarbeitungshilfsmitteln auch Gleitmittel benötigt. Bei der Verarbeitungs von Hart-PVC werden seit langem 12-Hydroxystearinsäurereste enthaltende Triglyceride in Form von gehärtetem Ricinusöl als Gleitmittel eingesetzt. Formgegenstände, die unter Verwendung von gehärtetem Ricinusöl hergestellt wurden, zeichnen sich durch hohen Oberflächenglanz, beachtliche Oberflächenglätte und geringen Weißbruch im glasklaren, transparenten und pigmentierten Material aus. Zu dem kann gehärtetes Ricinusöl in verhältnismäßiger hoher Dosierung eingesetzt werden, ohne daß Trübungen oder Ausschwitzerscheinungen auftreten (S. Riethmayer, "Gummi-Asbest-Kunststoffe" 18. Jahrg., 1965, S. 428). Wegen der genannten Eigenschaften ist gehärtetes Ricinusöl ein gesuchtes Gleitmittel für die Verarbeitung von Hart-PVC, vor allem bei der Herstellung von transparenten bis glasklaren Behältern für die Verpackung von Lebensmitteln und Getränken.

Die Verfügbarkeit des natürlichen Ricinusöls und damit auch die Verfügbarkeit des gehärteten Ricinusöls ist jedoch starken Schwankungen unterworfen. Mißernten in den Hauptanbaugebieten des Ricinus communis, Brasilien und Indien, führen in mehr oder weniger großen Abständen zu einer Verknappung des Ausgangsmaterials. Es besteht daher ein Bedürfnis nach einem Ersatz für gehärtetes Ricinusöl, der bei der Verwendung als Gleitmittel für Polyvinylchlorid und überwiegend Vinylchlorid enthaltende Mischpolymerisate zumindest zu ebenso guten Ergebnissen führt, wie das zu ersetzende Produkt. Vor allem sollte das Austauschprodukt von einer breiteren, weniger krisenanfälligen Rohstoffbasis aus zugänglich sein.

Es wurde gefunden, daß Hydroxyfettsäurerreste enthaltende Triglyceride, erhältlich durch Epoxidation von Ruböl, Sojaöl oder Talg, die ein- und mehrfach ungesättigte Fettsäuren enthalten, und anschließende hydrierende spaltung der Oxiranringe, als Ersatz für gehärtetes Ricinusöl eingesetzt werden können.

Gegenstand der Erfindung ist deshalb die Verwendung von Hydroxyfettsäurereste enthaltenden Triglyceriden, wie sie durch Hydrierung von epoxidierten Ruböl, Sojaöl und Talg erhältlich sind, als Gleitmittel für die formgebende Verarbeitung von Polyvinylchlorid oder überwiegend Vinylchlorid enthaltenden Mischpolymerisaten.

Die erfindungsgemäß zu verwendenden Triglyceride stellen eine an sich bekannte Klasse von chemischen Verbindungen dar, die nach gängigen Methoden der organischen Synthese hergestellt werden können. Als Ausgangsmaterial für die Herstellung der Hydroxyfettsäurereste enthaltenden Triglyceride eignen sich solche Fette und Öle natürlichen Ursprungs, deren Fettsäureanteil zu einem hohen Prozentsatz aus einfach und mehrfach ungesättigten Fettsäuren besteht.

Ruböl, Sojaöl und Talg als natürliche Fette und Öle werden zweckmäßigerweise nach den aus der Herstellung von Epoxidweichmachern bekannter Verfahren epoxidiert, beispielsweise durch Umsetzung mit Peressigsäure in Anwesenheit von sauren Katalysatoren oder mit in situ aus Ameisensäure und Wasserstoffperoxid gebildeter Perameisensäure (siehe DE—PS 857 364).

Bei der anschließenden Hydrierung der epoxidierten Fettsäuretriglyceride sind die Reaktionsbedingungen so zu wählen, daß nur die in den Fettsäureresten vorhandenen Oxiranringe unter Ausbildung einer alkoholischen Hydroxygruppe aufgespalten, die vorhandenen Estergruppierungen jedoch intakt bleiben. Hierfür geeignete Verfahrensbedingungen sind beispielsweise in der DE—OS 20 21 530 beschrieben. Danach können epoxidierte Fettsäureester in Gegenwart von Katalysatoren auf Basis von Schwermetallen der VIII. Gruppe des Periodensystems bei 100 bis 250°C unter einem Wasserstoffdruck von mindestens 50 atü (=51,7 bar) zu den entsprechenden Hydroxyfettsäureestern hydriert werden.

Der Fettsäureanteil der auf dem angegebenen Weg hergestellten Hydroxyfettsäuretriglyceride enthält in Abhängigkeit von dem jeweils verwendeten Ausgangsmaterial wechselnde Anteile an Mono- und Dihydroxyfettsäuren, Ketofettsäuren, gegebenenfalls Tri- und Tetrahydroxyfettsäuren und daneben selbstverständlich die bereits im Ausgangsmaterial vorhandenen gesättigten Fettsäuren. Die Zusammensetzung des Fettsäureanteils schwankt nicht nur in Abhängigkeit von der Art des gewählten Ausgangsmaterials, sondern auch bei vorgegebenem Ausgangsmaterial in Abhängigkeit von der Herkunft und der Vorgeschichte des betreffenden Fettes oder Öls. So wurden beispielsweise bei der Analyse von zwei Chargen Hydroxyfettsäurereste enthaltender Triglyceridgemische, die aus erukasäurearmem Ruböl unterschiedlicher Herkunft hergestellt waren, für die Hydroxy- und Ketocarbonsäuren folgende Werte gefunden, wobei sich die angegebenen Prozentsätze auf die Gesamtmenge der vorhandenen Fettsäuren beziehen:

| | Produkt I | Produkt II |
|---|---|---|
| Monohydroxy-$C_{18}$-carbonsäuren | 48,8 | 49,1 |
| Dihydroxy-$C_{18}$-carbonsäuren | 9,3 | 12,7 |
| Keto-$C_{18}$-carbonsäuren | 5,3 | 5,4 |

2

In zwei Chargen von Hydroxyfettsäuretriglyceriden aus Sojaöl unterschiedlicher Provenienz wurden die folgenden Werte festgestellt:

|  | Produkt I | Produkt II |
|---|---|---|
| Monohydroxy-$C_{18}$-carbonsäuren | 43,6 | 41,9 |
| Dihydroxy-$C_{18}$-carbonsäuren | 15,1 | 15,1 |
| Keto-$C_{18}$-carbonsäuren | 2,3 | 2,3 |

Als weitere Beispiele seien die Analysenwerte von zwei Produkten angeführt, die aus Talg von unterschiedlicher Herkunft erhalten worden waren:

|  | Produkt I | Produkt II |
|---|---|---|
| Monohydroxy-$C_{18}$-carbonsäuren | 31,5 | 24,4 |
| Dihydroxy-$C_{18}$-carbonsäuren | 3,7 | 2,3 |
| Keto-$C_{18}$-carbonsäuren | 1,0 | 2,4 |

Die erfindungsgemäß zu verwendenden Hydroxyfettsäurereste enthaltenden Triglyceride werden in einer Menge von 0,3 bis 3 Gewichtsteilen, vorzugsweise 0,5 bis 1,0 Gewichtsteilen, auf 100 Gewichtsteile Harz eingesetzt.

Die Gleitmittelwirkung der Hydroxyfettsäuretriglyceride kann bei der formgebenden Verarbeitung aller thermoplastischen Polymerisate ausgenutzt werden, deren wesentlicher Bestandteil Vinylchlorid ist. In erster Linie kommen hier Homopolymere des Vinylchlorids mit K-Werten im Bereich von 50 bis 80, insbesondere von 55 bis 70 in Betracht, die durch Emulsions-, Suspensions- und Massepolymerisation hergestellt wurden. In Betracht kommen weiterhin Mischpolymerisate mit mindestens 50 Gewichtsprozent Vinylchlorid und weiteren polymerisierbaren Monomeren wie Vinylestern, insbesondere Vinylacetat, Methacrylsäureestern, insbesondere Methylmethacrylat und Butylmethylacrylat, Fumarsäureestern, gegebenenfalls freier Crotonsäure oder Fumarsäure in untergeordneter Menge, sowie Butadien und vorzugsweise Vinylidenchlorid. Die Polymerisate können auch nachchloriert sein.

Neben den erfindungsgemäß als Gleitmittel eingesetzten Hydroxyfettsäurereste enthaltenen Triglyceriden werden in die thermoplastischen Formmassen in der Regel weitere für diese Zwecke bekannte Zusätze in dem Maß eingearbeitet, wie dies für die vorgesehene Art der formgebenden Verarbeitung und die beabsichtigte Verwendung der Formgegenstände angezeigt erscheint. Als solche Zusätze kommen vor allem in Betracht: Stabilisatoren auf Basis von Metallverbindungen, beispielsweise Zinn-, Blei-, Cadmium-, Barium-, Zink- und Calciumverbindungen, Costabilisatoren auf Basis von organischen Verbindungen, beispielsweise ß-Diketonen, α-Ketoenolester, α-Acyllactone, substituierte 1,2-Dihydropyridindicarbonsäuren-(3,5) und substiuierte Pyrrole, Antioxidantien, beispielsweise sterisch geinderte Phenole, Hilfsmittel zur Erhöhung der Schlagzähigkeit (high impact modifier), Hilfsmittel zur Verbesserung des Fließverhaltens (flow promoter) Antistatika und gegebenenfalls Weichmacher.

Die erfindungsgemäß zu verwendenden Triglyceridgemische eignen sich insbesondere für Formmassen auf Basis von Polyvinylchlorid oder überwiegend Vinylchlorid enthaltende Mischpolymere, die als Stabilisatoren eine Kombination aus Calcium- und Zinkseifen oder Organozinnverbindungen enthalten.

Es hat sich gezeigt, daß thermoplastische Formmassen auf Basis von Polyvinylchlorid oder überwiegend Vinylchlorid enthaltenden Mischpolymeren, die die erfindungsgemäß zu verwendenden Triglyceride als Gleitmittel enthalten, in Bezug auf statische Thermostabilität, dynamische Stabilität, Klebfreiheit und sonstiges Verhalten während und nach der Verformung durchaus mit solchen Formmassen vergleichbar sind, in die hydriertes Ricinusöl als Gleitmittel eingearbeitet wurde.

Beispiele

In den Beispielen 1 bis 6 wurden als erfindungsgemäß zu verwendende Hydroxyfettsäurereste enthaltende Triglyceride die folgenden, aus natürlichen Fetten und Ölen durch in-situ-Perameisensäureepoxidation und nachfolgende Sumpfphasenhydrierung in Gegenwart eines nickelhaltigen Katalysators erhaltenen Produkte eingesetzt:

Substanz 1

Hergestellt aus erukasäurearmem Rüböl; Jodzahl$\leqq$5; Hydroxylzahl 145—160; Säurezahl$\leqq$5; Verseifungszahl 175—180.

Substanz 2

Hergestellt aus Sojaöl; Jodzahl$\leqq$5; Hydroxylzahl 150—165; Säuerzahl$\leqq$5; Verseifungszahl 175—185.

Substanz 3

Hergestellt aus Talg; Jodzahl≦5; Hydroxylzahl 70—90; Säurezahl≦5; Verseifungszahl 180—190. Ferner wurde als

Vergleichssubstanz

Gehärtetes Ricinusöl eingesetzt mit Jodzahl≦5; Hydroxylzahl 150—160; Säurezahl≦5; Verseifungszahl 175—180.

Beispiel 1

Durch mechanisches Vermischen der Einzelbestandteile wurden die PVC-Formmassen A bis D der folgenden Zusammensetzung erhalten (GT=Gewichtsteile):

| | |
|---|---|
| 100 GT | Suspensions-PVC, K-Wert 58 (Solvic® 258 RB), |
| 10 GT | High impact modifier auf Basis eines Methacrylat-Butadien-Styrol-Mischpolymerisats (Kane® ACE B 28), |
| 1 GT | Flow modifier auf Basis von Methacrylsäureester (Paraloid® K 125), |
| 5 GT | Calciumstearat, |
| 0,2 GT | Zinkoctoat, |
| 0,2 GT | Komplexester aus Adipinsäure, Pentaerythrit und Stearinsäure im Molverhältnis 6:7:16; Hydroxylzahl ca. 2; Säurezahl ca 10, |
| 0,2 GT | Distearoylmethan, |
| 5 GT | epoxidiertes Sojaöl, |
| 1,5 GT | Gleitmittel. |

Als Gleitmittel wurden in dern Formmassen A, B und C die Substanzen 1, 2 oder 3, in der Formmasse D die Vergleichssubstanz eingesetzt.

Die erhaltenen Polyvinylchloridformmassen wurden auf einem Laborwalzwerk der Abmessung 450×220 mm (Fa. Berstorff) bei einer Walzentemperatur von 170°C und einer Walzendrehzahl von 12,5 Upm in Gleichlauf im Verlauf von 5 Minuten zu Prüffellen vererbeitet. Zur Prüfung der statischen Thermostabilität der PVC-Formmassen wurden die ca. 0,5 mm dicken Felle zu quadratischen Probestücken mit 10 mm Kantenlänge zerschnitten, die anschließend in einem Trockenschrank mit 6 rotierenden Horden (Heraeus FT 420 R) einer Temperatur von 180°C ausgesetzt wurden. Im Abstand von 15 Minuten wurden Proben entnommen und deren Farbveränderung begutachtet.

In der nachfolgenden Tabelle 1 ist für jede Formmasse zunächst unter "Anfangsstabilität" die Zeit angegeben, nach der die Proben eine deutliche Verfärbung zeigten. Unter "Stabilitätsabbruch" ist die Zeit angegeben, nach der der Test wegen zu starker Verfärbung abgebrochen wurde. Im übrigen waren alle Proben vor dem Beginn der thermischen Behandlung ganz leicht gelblich gefärbt.

TABELLE 1

Statische Thermostabilität der Formmassen A bis D

| Form-masse | Gleitmittel | Anfangsstabi-lität (min) | Stabilitäts-abbruch (min) |
|---|---|---|---|
| A | Substanz 1 | 30 | 120 |
| B | Substanz 2 | 45 | 105 |
| C | Substanz 3 | 30 | 105—120 |
| D | Vergleichssubstanz | 30—45 | 105 |

Beispiel 2

Durch mechanisches Vermischen der Einzelbestandteile wurden die PVC-Formmassen E, F und G der folgenden Zusammensetzung erhalten (GT=Gewichtsteile):

| | |
|---|---|
| 100 GT | Suspension-PVC, K-Wert 58 (Solvic® 258 RB) |
| 10 GT | High impact modifier auf Basis eines Methacrylat-Butadien-Styrol-Mischpolymerisats (Kane® ACE B-28) |
| 1 GT | Flow modifier auf Basis von Methacrylsäureester (Paraloid® K 125) |
| 1,5 GT | Dioctylzinnmercaptid (Irgastab® 17 MOK) |
| 0,5 GT | Komplexester aus Adipinsäure, Pentaerythrit und Stearinsäure im Molverhältnis 6:7:16; Hydroxylzahl ca. 2; Säurezahl ca. 10 |
| 0,75 GT | Glycerinmonohydroxystearat |
| 0,75 GT | Gleitmittel |

4

# EP 0 166 201 B1

Gleitmittel wurden in den Formmassen E und F die Substanzen 1 und 2, in der Formmasse G die Vergleichssubstanz eingesetzt.

Die statische Thermostabilität der erhaltenen Formmassen wurde nach der in Beispiel 1 beschriebenen Methode untersucht. Die dabei gefundenen Ergebnisse sind in der nachfolgenden Tabelle 2 wiedergegeben. Alle Proben waren vor dem Beginn der thermischen Behandlung farblos.

TABELLE 2
Statische Thermostabilität der Formmassen E bis G

| Form-masse | Gleitmittel | Anfangsstabi-lität (min) | Stabilitäts-abbruch (min) |
|---|---|---|---|
| E | Substanz 1 | 75 | 150 |
| F | Substanz 2 | 75 | 150 |
| G | Vergleichssubstanz | 75 | 150 |

Beispiel 3

Zur Bestimmung der Klebfreiheit wurden jeweils 220 g der in Beispiel 1 beschriebenen Formmassen A bis D auf dem in Beispiel 1 beschriebenen Walzwerk bei einer Walzentemperatur von 200°C zu einem umlaufenden Fell ausgewalzt und das Fell so lange weiterbearbeitet, bis die Formmasse fest auf der Oberfläche einer Walze haften blieb. Die Spaltbreite zwischen den Walzen war dabei so eingestellt, daß die Dicke der umlaufenden Felle jeweils 0,5 mm betrug.

In der nachfolgenden Tabelle 3 ist zunächst für jede Formmasse die Zeit angegeben, nach der die erste Verfärbung der in allen Fällen ganz leicht gelblichen Anfangsfarbe beobachtet wurde (Anfangsstabilität) und dann die Zeit der Klebfreiheit.

TABELLE 3
Klebfreiheit der Formmassen A bis D bei 200°C

| Form-masse | Gleitmittel | Anfangsstabi-lität (min) | Klebfreiheit (min) |
|---|---|---|---|
| A | Substanz 1 | 6 | 16 |
| B | Substanz 2 | 8 | 14 |
| C | Substanz 3 | 6 | 18 |
| D | Vergleichssubstanz | 8 | 14 |

Beispiel 4

Nach der in Beispiel 3 beschriebenen Methode wurde die Klebfreiheit der Formmassen E bis G aus Beispiel 2 bei 200°C bestimmt. Die gefundenen Ergebnisse sind in der nachfolgenden Tabelle 4 wiedergegeben. In Spalte 3 ist die Zeit angegeben, nach der die erste Farbveränderung der zu Beginn in allen Fällen farblosen Formmassen beobachtet wurde.

TABELLE 4
Klebfreiheit der Formmassen E bis G bei 200°C

| Form-masse | Gleitmittel | Anfangsstabi-lität (min) | Klebfreiheit (min) |
|---|---|---|---|
| E | Substanz 1 | 26 | 26 |
| F | Substanz 2 | 24 | 24 |
| G | Vergleichssubstanz | 26 | 44 |

5

# EP 0 166 201 B1

Beispiel 5

Zur Bestimmung der dynamischen Stabilität und des minimalen Knetwiderstandes wurde ein Plastograph (Plasticorder PL 151; Fa. Brabender; siehe P. Klenk, "Der Plastverarbeiter" 21. Jahrg., 1970/7, S. 642—644) eingesetzt. Die Kammertemperatur betrug 190°C, die Drehzahl 40 Upm. Die Untersuchungen wurden jeweils an 32 g der Formmassen A bis D aus Beispiel 1 durchgeführt.

In der nachfolgenden Tabelle sind neben der Zeit, nach der der Versuch wegen zu starker Verfärbung jeweils abgebrochen wurde (Stabilitätsabbruch) die während des Versuchs beobachteten Minima des Knetwiderstands und der Massetemperatur angegeben.

TABELLE 5

Dynamische Stabilität der Formmassen A bis D

| Form-masse | Gleitmittel | Stabili-tätsabbr. (min) | Min. Knet-widerstand (Nm sec$^{-1}$) | Min. Masse-temp. (°C) |
|---|---|---|---|---|
| A | Substanz 1 | 22,0 | 5,4 | 198,5 |
| B | Substanz 2 | 18,4 | 5,3 | 199,0 |
| C | Substanz 3 | 20,9 | 5,3 | 199,0 |
| D | Vergleichssubstanz | 21,3 | 5,3 | 199,0 |

Beispiel 6

Nach der in Beispiel 5 beschriebenen Methode wurden die dynamische Stabilität und der minimale Knetwiderstand der Formmassen E bis G aus Beispiel 2 bestimmt. Die gefundenen Ergebnisse sind in der nachfolgenden Tabelle 6 wiedergegeben.

TABELLE 6

Dynamische Stabilität der Formmassen E bis G

| Form-masse | Gleitmittel | Stabili-tätsabbr. (min) | Min. Knet-widerstand (Nm sec$^{-1}$) | Min. Masse-temp. (°C) |
|---|---|---|---|---|
| E | Substanz 1 | 20,2 | 5,4 | 199,0 |
| F | Substanz 2 | 19,2 | 5,3 | 200.0 |
| G | Vergleichssubstanz | 18,6 | 5,4 | 199,0 |

**Patentansprüche**

1. Verwendung von Hydroxyfettsäurereste enthaltenden Triglyceriden, erhältlich durch Hydrierung von epoxidiertem Rüböl, Sojaöl oder Talg, als Gleitmittel für die formgebende Verarbeitung von Polyvinylchlorid oder überwiegend Vinylchlorid enthaltenden Mischpolymerisaten.

2. Verwendung nach Anspruch 1, dadurch gekennzeichnet, daß die Hydroxyfettsäurereste enthaltenden Triglyceride in einer Menge von 0,3 bis 3,0 Gewichtsteilen auf 100 Gewichtsteile Harz eingesetzt werden.

3. Verwendung nach Anspruch 2, dadurch gekennzeichnet, daß die Hydroxyfettsäurereste enthaltenden Triglyceride in einer Menge von 0,5 bis 1,0 Gewichtzsteilen auf 100 Gewichtsteile Harz eingesetzt werden.

**Revendications**

1. Utilisation de triglycérides renfermant des résidus d'hydroxyacides gras, obtenables par hydrogénation d'huile de navette, d'huile de soja ou de suif époxydé, en tant que lubrifiant pour le formage de chlorure de polyvinyle ou de copolymères renfermant principalement du chlorure de vinyle.

2. Utilisation selon la revendication 1, caractérisée en ce que les triglycérides renfermant des résidus d'hydroxyacides gras sont mis en oeuvre dans une proportion allant de 0,3 à 3,0 parties en poids pour 100 parties en poids de résine.

6

3. Utilisation selon la revendication 2, caractérisée en ce que les triglycérides renfermant des résidus d'hydroxyacides gras sont mis en oeuvre dans une proportion allant de 0,5 à 1,0 partie en poids pour 100 parties en poids de résine.

**Claims**

1. The use of triglycerides containing hydroxy fatty acid residues obtainable by hydrogenation of epoxidized rapeseed oil, soybean oil or tallow as lubricants for the moulding of polyvinyl chloride or copolymers predominantly containing vinyl chloride.

2. The use claimed in claim 1, characterized in that the triglycerides containing hydroxy fatty acid residues are used in a quantity of from 0.3 to 3.0 parts by weight to 100 parts by weight of resin.

3. The use claimed in claim 2, characterized in that the triglycerides containing hydroxy fatty acid residues are used in a quantity of from 0.5 to 1.0 part by weight to 100 parts by weight of resin.